# EUROPEAN PATENT APPLICATION

(11) **EP 0 949 110 A2**
(43) Date of publication of application: **13.10.1999**
(21) Application number: 99850057.3
(22) Date of filing: 06.04.1999
(51) Int. Cl.: B60L 3/00, B60K 1/00

(54) **Arrangement at industrial truck with AC-motor**

(30) Priority: 08.04.1998 SE 9801282
(71) Applicant: BT Industries Aktiebolag, S-59581 Mjölby (SE)
(72) Inventor: Arnljotson, Gudmundur, 582 73 Linköping (SE); Henriksson, Kari, 595 31 Mjölby (SE)
(74) Representative: Berglund, Erik Wilhelm

(57) **Abstract**

Device at an industrial truck with an AC-motor, a chassis and a drivers place (14) with a support part there for the driver partly constituted by a housing (32) of magnetic material releasably arranged at the chassis so that the housing (32) essentially covers an electric control unit. Preferably also the cables (24, 26 ) going between the control unit and the motor are twisted and surrounded by a second housing (34).

## Description

This invention concerns an arrangement at an industrial truck with AC-motor in accordance with the preamble of claim 1.

### Prior art

The industrial trucks of today that are used indoors are usually provided with an electric motor in the shape of a DC- motor that drives a driving wheel via a gearbox. The truck is further provided with a number of caster wheels and or support wheels.

Lately trucks with AC-motors have been marketed. These have many competitive advantages as to performance in relation to the traditional DC-trucks.

A drawback at AC-powering is however that pulsating magnetic fields are generated. which may be harmful to the driver, and which requires measures to reduce these fields to non harmful levels. At DC-current only, static fields occur which are not considered to be harmful to humans.

A problem that arise specifically at truck use is that the trucks have to be very compact and space optimized in order to handle goods in narrow places. This leads to difficulties in the placing of the magnetic fields generating electric components as motor, control unit and cables at a large distance from the driver. A further drawback is that no real limit values exist and that the research has not been able to establish what is dangerous, which makes it desirable to reduce these fields as far as possible, whereby every small additional measure may turn out to be valuable.

There are today some known ways to generally reduce magnetic fields effecting people. One method is to blank off the generating cables by a screening shield. Another method is to "short-circuit" the fields with a parallel surrounding magnetic material, through which the spreading of the fields outside this "short-circuiting circuit" is avoided. At three-phase cables it is known to twist the cables in order to quench the fields against each other.

### Object of the invention

The object of the invention is to achieve an AC-driven truck where the driver is subjected to least possible magnetic radiation, where the truck can be designed in a functional, ergonomic, cost-efficient and reliable optimal way.

### Brief summary of the invention

The object of the invention is achieved with a device in accordance with the characterizing part of claim 1. By arranging the electric control unit close to the driver such as at DC-trucks a good accessibility for service is achieved and a functionally good environment. The location close to the driver leads potentially to powerful magnetic fields which in accordance with the invention are eliminated by arranging a protective housing of magnetic material which is connected to the chassis so that the fields are led away by the housing and the chassis. Through this design the magnet fields in the housing and the chassis are short-circuited and does not reach the driver. Since the existing chassis is a part of the circuit by which the magnetic fields are short circuited the size of the housing in itself can be minimized. This is important at trucks since the lack of space is a dominant fact.

A design according to claim 2 gives a solution where magnetic fields are short-circuited since they develop in the shape of loops around the cables. According to this embodiment the housing together with parts of the chassis constitute precisely such a short-circuiting circuit.

By, according to claim 3, making the housing and the chassis in an iron based material e.g. sheet metal, also a functional and from fabrication points good solution is obtained.

By a device according to the claims 4 - 6 also the cables are shielded from the control unit in a similar way here an additional twisting leads to further reduced fields since they quench each other.

The claims 7 and 8 define a preferable embodiment where the cables directly at the control unit are arranged so that each of their magnetic fields are counteracted by the field from an opposed conductor in the control unit, while claim 9 defines a suitable truck lay out, in particular for a high lifting reach truck where AC-powering has great advantages.

All above described features provide in combination with each other the largest possible reduction of the magnetic fields that otherwise could affect the truck driver.

Further features and advantages of the invention are apparent from the below described preferred embodiment with reference to the enclosed figures.

### List of figures

Figure 1 shows a schematic view of a truck provided with a device in accordance with the invention.
Figure 2 shows a schematic view from above of the area close to the drivers seat.
Figure 3 shows a schematic view from above of an electric control unit.

### Description of an embodiment

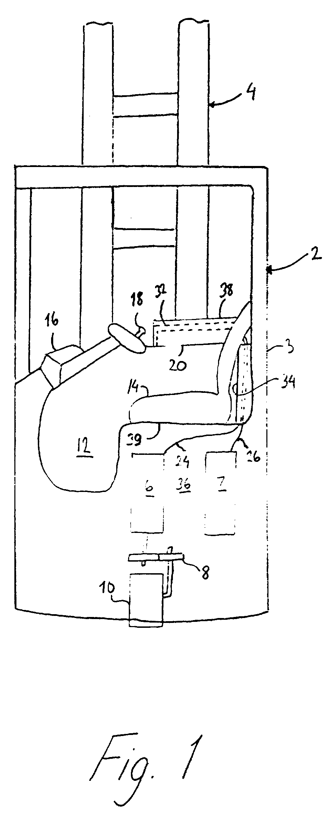

The industrial truck shown in figure 1 is preferably used indoors and include as essential parts a chassis 2 on which a lifting part 4 with a frame and load forks for the handling of goods is arranged. The truck is powered by an AC-motor 6 in the shape of an asynchronous motor that transfer power to a driven wheel 10 via a gearbox 8. The truck is further provided with not shown support wheels on the side of the lifting part.

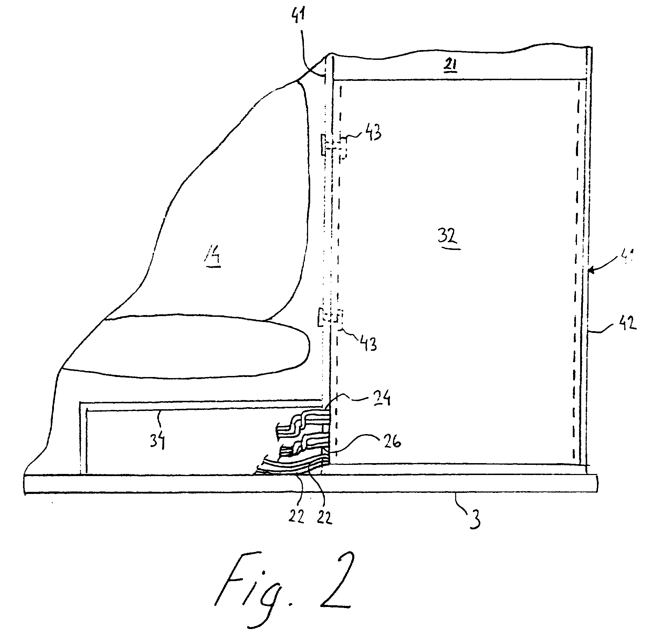

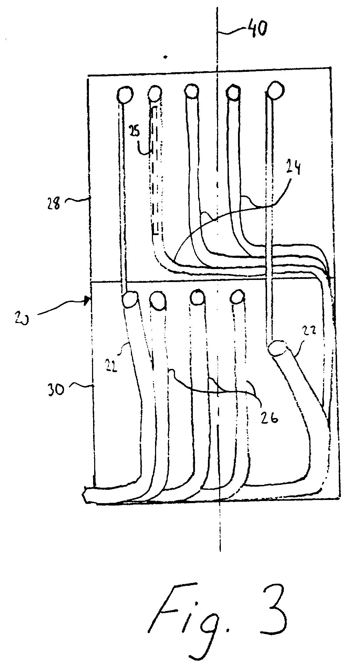

The truck further includes a driving compartment 12 with a drivers seat 14, a control panel 16, and a steering wheel 18. An electric control unit 20 is arranged at the side of the chassis facing the lifting part 4. The control unit is fed electrically via cables 22 (see fig 2 and 3) from a battery (not shown). Further a number of cables 24, 26 are connected to the driving motor 6 of the truck and a lifting motor 7.

The cables 22, 24, 26 are shown in more detail in figures 2 and 3. The feed cables 22 are DC-cables and therefor do not generate the mentioned problem. The cables 24 each constitute one phase to the driving motor 6, while the cables 26 each is one phase to the lifting motor 7. These six cables generate the mentioned fields that the invention intends to reduce or shield from the driver.

From the figures 1 and 2 is apparent that the cables 22, 24, 26 run behind the drivers seat 14 inside a side wall 3 of the chassis 2 to a space 36 located below the drivers seat 14. They are preferably taken through an opening in a hatch 39 on which the seat is arranged. The hatch enables access to the space 36 for service and is preferably made of the same material as the rest of the chassis 2.

In order to shield magnetic fields generated by conductors in the control unit 20 and parts of the cables 24, 26 close thereto a first housing is arranged to cover the control unit 20. The housing 32 is preferably on its outer side covered by a soft material that constitute a support part 38 for the right arm of the driver. An electronic logic unit 21 is arranged directly at the electric control unit 20 (se figure 2). This logic unit 21 does not have to be covered by the housing 32 since the currents in it are negligible in relation to the large power delivering currents in the electric control unit 20 and the magnetic fields are proportional to the current. It may however be design-wise and ergonomically advantageous also to cover the logic unit with a housing constituting a support for the driver. With the term electric control unit is thus here meant only the part where the large power delivering currents are present.

From figure 2 is also apparent that the housing 32 according to this embodiment is arranged at a chassis part 41 in the shape of a console protruding from the lateral wall 3 of the chassis. The console 41 has upturned flanges 42 to which the housing 32 is fastened by means of screws or the like. The console 41 also constitute a supporting surface for the control unit 20 and may of course rest against some in the chassis fastened part or constitute a part integrated directly in the chassis.

A second shielding housing 34 is arranged behind the seat 14. The housings 32. 34 are removable arranged directly against the chassis 2 and are made of some magnetic material for best result. Preferably they have a thickness of 2-5 mm and are made of an iron based material of the same type as the rest of the chassis, that is sheet metal of suitable quality.

The parts of the cables 24, 26 that are arranged between the exit from the first housing 32 and the space 36 below the drivers seat are twisted (the cables for the driving motor by themselves and the cables of the lifting motor 26 by themselves). In order to obtain best possible quenching and effect the length of a twist cycle should be less than the distance to the closest body part effected by magnetic field. At this embodiment this means 15-20 cm to the drivers back. Further this means that a twisting immediately at the control unit 20 would not give the desired result since the drivers arm rest close to this area and that it from a practical point is very difficult to achieve such a short pattern cycle length.

In figure 3 the control unit 20 is shown with the housing 32 demounted, the parts of the cables 22, 24, 26 that are located directly at the control unit are also shown. As apparent the control unit is constituted by two parts, a first part 28 for control of the driving motor and a second part 30 for the lifting motor 7. The control unit comprises in itself known parts with among other things in each control part 28, 30 a number of electric conductors 25, preferably of copper. For clarity only one conductor is shown in fig 3 but a similar conductor exist below all six cables 24, 26. These conductors 25 are parallel with an imaginary axis 40 in the transverse direction of the truck and are in a known manner provided with a number of electric components. The housing 32 and the chassis 2 surrounds here the axis 40 in essentially all its perpendicular directions along the length of the control unit.

According to the invention the cables are however arranged parallel with each other in the transverse direction of the truck essentially along the entire length of each control unit 28, 30. By arranging the cables 24, 26 in this way parallel with the copper conductors 25 but with opposed current direction a considerable quenching of the magnetic fields is obtained.

The invention can within the frame of the patent claims be executed according to a number of alternative embodyments other than those shown. For instance choice of material and types of truck can be varied even if experiments have shown that the suggested materials and layout is advantageous. Also the number of the cables can be changed if desired, for instance with several cables for each phase, which are also twisted relative each other.

## Claims

1. Device at an industrial truck including at least one AC-motor (6, 7), a chassis (2), a place (12) for the driver with a support part (38) there for the driver, an electric control unit (20) arranged in the support part (38) to which electrical cables (22, 24, 26) are connected with parts located directly at the control unit (20), **characterized in** that a housing (32) is releasable arranged at the chassis (2), that the support part (38) is arranged at the housing (32), that the housing (32) and the chassis are made of magnetic material, that the housing (32) is arranged at the chassis (2) so that it together with a part of the chassis (2) essentially surrounds the control unit (20) and mentioned cable parts.

2. Device according to claim 1, where the control unit (20) includes a number of electrical conductors (25) running essentially parallel with an imagined axis (40), **characterized in** that the axis (40) in essentially all perpendicular directions is surrounded by the housing (32) or the chassis (2) along its entire length through the control unit (20).

3. Device according to claim 1 or 2 , **characterized in** that the chassis (2) as well as the housing (32) are made of iron based material or materials.

4. Device according to any of the claims 1-3 where the motor (6, 7) is located in a space at least partially below the drivers place (12), **characterized in** that cables (22, 24, 26) run between the control unit (20) and said space (36), which cables 22, 24, 26) are surrounded by the chassis (2) and a second housing (34).

5. Device according to claim 4, **characterized in** that the two housings (32, 34) are integrated into one part.

6. Device according to claim 4 or 5, **characterized in** that the cables (24, 26) are constituted by at least a bundle with several leads, at least one lead for each phase, which are twisted with each other, and where the length of a repeated cycle of the twist pattern is less than the distance between the cables (24, 26) and the closest part of the normal working position of the driver.

7. Device according to any of the preceding claims, **characterized in** that a number of cables (24, 26) are fastened to the upper side of the control unit (20) where each cable (24, 26) is oriented essentially parallel with a respective conductor (25) located in the control unit (20) along essentially the entire length of the conductor (25).

8. Device according to claim 7, **characterized in** that the conductors (25) extend essentially transversely relative the truck.

9. Device according to any of the claims 4 - 8 where the truck includes a lifting part (4) for the handling of goods, **characterized in** that the place of the driver (12) includes a drivers seat (14) for a driver sitting in the cross direction of the truck where said cables (24, 26) run behind the back of the seat and inside of a side wall (3) of the chassis (2), and that the support part (38) is situated between the place of the driver and the lifting part (4).
